# EUROPÄISCHE PATENTSCHRIFT

(11) **EP 3 071 423 B1**
(45) Veröffentlichungstag und Bekanntmachung des Hinweises auf die Patenterteilung: **07.08.2019**
(21) Anmeldenummer: 14755829.0
(22) Anmeldetag: 28.08.2014
(51) Int. Cl.: B60C 9/00, B29L 31/00, B60C 9/20, B29K 67/00, B29K 77/00, B29C 55/00, D02G 3/06, D06M 15/693, D06M 101/32, D06M 101/34, B29K 105/00, B60C 9/22

(54) **HYBRIDFESTIGKEITSTRÄGER**
HYBRIDYARN
FIL HYBRIDE

(30) Priorität: 19.11.2013 DE 102013223573
(43) Veröffentlichungstag der Anmeldung: 28.09.2016
(73) Patentinhaber: Continental Reifen Deutschland GmbH, 30165 Hannover (DE)
(72) Erfinder: REESE, Wolfgang, 31228 Peine (DE)
(74) Vertreter: Finger, Karsten
(86) Internationale Anmeldenummer: PCT/EP2014/068214
(87) Internationale Veröffentlichungsnummer: WO 2015/074778

(56) Entgegenhaltungen:
- EP-A1- 2 662 225
- EP-A1- 2 865 541

## Beschreibung

Die Erfindung betrifft einen Festigkeitsträger für elastomere Erzeugnisse, insbesondere für die Gürtelbandage eines Fahrzeugluftreifens, wobei der Festigkeitsträger ein Hybridcord ist, der zumindest ein niedrigmoduliges Garn mit einem Elastizitätsmodul von maximal 100 mN/(tex·%) und zumindest ein hochmoduliges Garn mit einem Elastizitätsmodul von mindestens 200 mN/(tex· %), jeweils nach ASTM D885M bei einer Dehnung von 3%, aufweist, wobei alle Garne des Hybridcords miteinander endverdreht sind und wobei der Hybridcord mit einer Haftimprägnierung versehen ist. Die Erfindung betrifft weiter ein Verfahren zur Herstellung eines solchen Festigkeitsträgers, wobei der Festigkeitsträger ein Hybridcord aufweisend zumindest ein niedrigmoduliges Garn mit einem Elastizitätsmodul von maximal 100 mN/(tex·%) und zumindest ein hochmoduliges Garn mit einem Elastizitätsmodul von mindestens 200 mN/(tex· %), jeweils nach ASTM D885M bei einer Dehnung von 3%, ist, wobei alle Garne des Hybridcords miteinander endverdreht sind, wobei ein Haftvermittler auf den Hybridcord aufgebracht wird, wobei der Hybridcord dann bei einer Temperatur von 100 °C bis 200 °C getrocknet wird, wobei der Hybridcord nach dem Trocknen bei einer Temperatur von 200 °C bis 250 °C heißverstreckt wird und wobei der Hybridcord nach der Heißverstreckung unter einer Restspannung bei 100 °C bis 200 °C relaxiert. Weiter betrifft die Erfindung die Verwendung eines solchen Festigkeitsträgers.

Um bei Fahrzeugluftreifen, insbesondere im Hochgeschwindigkeitseinsatz, eine Erhebung des Reifens durch die im Fahrbetrieb auftretenden Fliehkräfte zu verhindern, ist es bekannt, bei einem Fahrzeugluftreifen eine Gürtelbandage vorzusehen. Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt zumindest die Gürtelkanten ab. Die Gürtelbandage enthält üblicherweise parallel und im Wesentlichen in Umfangsrichtung verlaufende Festigkeitsträger in Form von Corden, die in Gummi eingebettet sind.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel zur besseren Haftung am einbettenden Gummi mit einer Haftimprägnierung versehen sind, in Längsrichtung einen Kalander oder einen Extruder zur Ummantelung mit der Kautschukmischung durchlaufen.

Die Festigkeitsträger der Gürtelbandage sollen bei der Reifenherstellung eine ausreichende Erhebung bei der Bombage sowie in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Um diesen Anforderungen zu genügen, sollten die Festigkeitsträger eine für die Reifenherstellung ausreichende Bruchdehnung aufweisen und sich bis zu einer Dehnung von ca. 3 % bis 4 % mit mäßigem Kraftaufwand und ab einer höheren Dehnung nur noch mit sehr hohem Kraftaufwand dehnen lassen.

Derartige Festigkeitsträger sind z.B. aus der nachveröffentlichten EP 2 865 541 A1 bekannt.

Als Festigkeitsträger für die Gürtelbandage sind schon unterschiedlichste Corde vorgeschlagen worden. So werden beispielsweise in der DE 10 2006 031 780 A1 für die Festigkeitsträger der Gürtelbandage Hybridcorde vorgeschlagen, die aus einem ersten Garn aus Aramid mit einer Feinheit von ≤ 840 dtex und aus einem weiteren Garn aus Nylon mit einer Feinheit von ≤ 940 dtex, welche miteinander endverdreht sind, aufgebaut sind.

Bei den aus der DE 10 2007 025 490 A1 bekannten Hybridcorden für die Gürtelbandage eines Fahrzeugluftreifens wird der Hybridcord aus zwei verdrehten Garnen gebildet, wobei ein Garn ein Garn aus Aramid mit einer Feinheit von ≤ 1680 dtex und das zweite Garn ein PES-Garn mit einer Feinheit von ≤ 1670 dtex ist.

Bei einer solchen Hybridkonstruktion wird ein hochmoduliges Garn durch Vertwistung mit einem niedrigmoduligen Garn auf eine helikale Bahn gebracht, um ihm eine geometrische Dehnung im Hybrid Cord zu ermöglichen. Dies erlaubt ein Dehnverhalten, das bei geringer Verformung einen geringeren Elastizitätsmodul und bei größerer Verformung einen im Vergleich hierzu größeren Elastizitätsmodul aufweist. Ein solches Kraft-Dehnungs-Verhalten ermöglicht die Erhebung bei der Bombage und der Vulkanisation des Reifens und macht den Reifen hochgeschwindigkeitstauglich.

Alle in den genannten Schriften explizit angegebenen Ausführungsbeispiele offenbaren jedoch nur Hybridcorde, die aus Garnen mit einer Feinheit von jeweils mindestens 840 dtex aufgebaut sind. Eine Verringerung der Feinheit führt im Allgemeinen zu einer geringeren Festigkeit, wodurch es bereits bei geringerer Belastung zum Bruch der Festigkeitsträger im Einsatz oder bei der Reifenherstellung kommen kann.

Die EP 2 662 225 A1 offenbart einen Fahrzeuglufteifen aufweisend einen Hybridcord der Karkasse, welcher aus vier Garnen gebildet ist. Der Hybridcord ist beinhaltet drei Aramidgarne und einen Nylongarn, wobei der Elastizitätsmodul der Aramidgarne jeweils größer ist als der Elastizitätsmodul des Nylongarns. Die Aramidgarne sind dabei helikal um das Nylongan geschlungen. Die Aramidgarne weisen dabei eine Feinheit von je 800 dtex bis 1100 dtex und das Nylongarn eine Feinheit von 350 dtex bis 600 dtex auf.

Die Entwicklung geht zudem dahin, Fahrzeugluftreifen mit geringem Rollwiderstand bereitzustellen.

Der vorliegenden Erfindung liegt die Aufgabe zu Grunde, einen Festigkeitsträger für elastomere Erzeugnisse, insbesondere für die Gürtelbandage von Fahrzeugluftreifen, bereitzustellen, welcher bei Verwendung des Festigkeitsträgers in der Gürtelbandage eines Fahrzeugluftreifens den Rollwiderstand des Fahrzeugluftreifens verringert und gleichzeitig seine Haltbarkeit sicherstellt und einen problemlosen Reifenbau samt Vulkanisation ermöglicht. Der vorliegenden Erfindung liegt auch die Aufgabe zu Grunde, ein Verfahren zur Herstellung eines solchen Festigkeitsträgers zur Verfügung zu stellen.

Die Aufgabe wird gelöst, indem das oder die niedrigmoduligen Garne eine kumulierte Feinheit von maximal 550 dtex, bevorzugt eine kumulierte Feinheit von maximal 250 dtex, aufweisen, indem das oder die hochmoduligen Garne eine kumulierte Feinheit von maximal 550 dtex, bevorzugt eine kumulierte Feinheit von maximal 250 dtex, aufweisen und indem der Hybridcord eine Bruchdehnung von mindestens 5% aufweist.

Eine Festigkeitsträgerlage aufweisend einen solchen Hybridcord als Festigkeitsträger zeichnet sich beim Einsatz im Fahrzeugluftreifen durch einen besonders geringen Rollwiderstand aus. Der Hybridcord weist eine geringere Feinheit und somit einen geringeren Querschnitt als Hybridcorde mit höherer Feinheit auf. Hierdurch kann eine Festigkeitsträgerlage bereitgestellt werden, die sich durch eine geringere Dicke auszeichnet. Zudem kann Festigkeitsträgermaterial und / oder Gummierung eingespart werden. Hierdurch sind Hysterese sowie Gewicht reduziert. Beim Einsatz in Fahrzeugluftreifen, insbesondere in der Gürtelbandage, kann somit ein verringerter Rollwiderstand erwirkt werden, während die übrigen vorteilhaften Eigenschaften eines Hybridfestigkeitsträgers erhalten sind. Durch die reduzierte Gummierungsdicke werden zudem Materialkosten eingespart.

Überraschenderweise wurde gefunden, dass solche Hybridcorde solch geringer Feinheit ein Kraft-Dehnungs-Verhalten mit ausreichender Festigkeit im Reifen aufweisen, wobei der reduzierte Modul mit einer erhöhten Anzahl an Corden im Gewebe kompensiert wird. Hierdurch ist eine ausreichende Haltbarkeit eines Fahrzeugluftreifens aufweisend solche Hybridcorde als Festigkeitsträger der Gürtelbandage gewährleistet und ein problemloser Reifenbau samt Vulkanisation ermöglicht.

Somit ist ein Hybridcord geringer Feinheit geschaffen, der sich hervorragend als Festigkeitsträger für elastomere Erzeugnisse, insbesondere als Festigkeitsträger für die Gürtelbandage von Fahrzeugluftreifen, eignet.

Besonders geeignet als Haftimprägnierung ist ein RFL-Dip (Resorzin-Formaldehyd-Latex-Dip), mit dem der Festigkeitsträger zur Haftung zwischen Gummi und Festigkeitsträger gedippt ist. Der Dip kann im 1-Bad- oder 2-Bad-Dipverfahren aufgebracht werden.

Im Rahmen der vorliegenden Erfindung stellen "Corde" linienförmige Gebilde dar, die aus zwei oder mehr miteinander endverdrehten Garnen bestehen. Ein "Hybridcord" stellt einen Cord dar, bei dem zwei oder mehr unterschiedliche Garne miteinander endverdreht sind. Ein "Garn" ist im Rahmen der vorliegenden Erfindung in Anlehnung an die DIN 60900 ein linienförmiges Gebilde, das aus einzelnen Filamenten oder Fasern besteht. Bevorzugt sind die Filamente oder Fasern des Garns miteinander verdreht. Ein Garn aus einem Material ist ganz oder teilweise aus diesem Material gebildet. Die Feinheit eines Cordes wird üblicherweise als die Summe der Feinheiten der Garne des Cordes berechnet.

Die "Bruchdehnung" ist die Dehnung bei Höchstzugkraft, d.h. die Dehnung bei der Kraft, bei der der Bruch des Hybridcordes erfolgt. Die Bruchdehnung ist gemessen nach ASTM D885M.

Zweckmäßig ist es, wenn alle Festigkeitsträger einer Festigkeitsträgerlage solche Hybridcorde sind.

Zweckmäßig ist es auch, wenn das oder die hochmoduligen Garne des Hybridcords eine kumulierte Feinheit von maximal 250 dtex aufweisen. Zweckmäßig ist es dabei, wenn die kumulierte Feinheit des oder der niedrigmoduligen Garne eine kumulierte Feinheit von maximal 250 dtex aufweisen.

Vorteilhaft ist es, wenn der Hybridcord ein niedrigmoduliges Garn aus Polyester (PES) und / oder ein niedrigmoduliges Garn aus Polyamid (PA) aufweist.

Das Polyestergarn (Garn aus PES) eines erfindungsgemäßen Hybridcords ist ein HMLS-Polyestergarn (High Modulus Low Shrinkage) und/oder ein HMHS-Polyestergarn (High Modulus High Shrinkage) und/oder ein HMNS (Regular)-Polyestergarn (High Modulus Normal Shrinkage). Vorzugsweise wird ein HMLS-Polyestergarn und/oder ein HMNS (Regular)-Polyestergarn verwendet. Diese Garne weisen eine gute thermische Stabilität auf, wodurch sie den Anforderungen in den genannten Anwendungen gerecht werden; wie z.B. der Hochgeschwindigkeitstauglichkeit bei der Anwendung im Fahrzeugluftreifen.

Vorteilhafterweise ist der Polyester (PES) eines Polyestergarns ausgewählt aus der Gruppe bestehend aus Polyethylenterephthalat (PET) und/oder Polyethylennaphthalat (PEN) und/oder Polybutylenterephthalat (PBT) und/oder Polycarbonat (PC), welches formal als Polyester betrachtet werden kann. Bevorzugt ist die Verwendung von PEN und/oder PET, besonders bevorzugt ist die Verwendung von PET. PET weist gegenüber PEN den Vorteil auf, dass es vergleichsweise kostengünstig ist. Handelt es sich bei dem Polyester um PET, so wird bevorzugt HMLS- und/oder HMNS (Regular)-PET verwendet.

Vorteilhafterweise ist das Polyamid eines Garns aus Polyamid ausgewählt aus der Gruppe bestehend aus Polyamid 6 (PA 6) und/oder Polyamid 66 (PA 66) und/oder Polyamid 12 (PA 12) und/oder Polyamid 11 (PA 11) und/oder Polyamid 1313 (PA 1313) und/oder Polyamid 4 (PA 4) und/oder Polyamid 7 (PA 7) und/oder Polyamid 8 (PA 8) und/oder Polyamid 9 (PA 9) und/oder Polyamid 46 (PA 46) und/oder Polyamid 610 (PA 610) und/oder Polyamid 612 (PA 612) und/oder Polyamid 69 (PA 69) und/oder Polyamid 66/6 (PA 66/6). Bevorzugt ist die Verwendung von PA 6 und/oder PA 66, besonders bevorzugt ist die Verwendung von PA 66.

Garne aus PA und Garne aus PES tragen beim Einsatz in der Gürtelbandage durch ihren Schrumpf bei niedriger Dehnung zu einem negativen Flatspotting-Verhalten (= reversible plastische Abplattungen in der Bodenaufstandsfläche beim Parken) bei. Eine Reduzierung dieser Festigkeitsträgermaterialien in einer Festigkeitsträgerlage eines Fahrzeugluftreifens führt somit zu einer Verbesserung des Flatspotting-Verhaltens und der Dimensionsstabilität.

Vorteilhaft ist es, wenn der Hybridcord ein hochmoduliges Garn aus Aramid und / oder ein hochmoduliges Garn aus Carbon und / oder ein hochmoduliges Garn aus Glas aufweist. Diese Materialien eignen sich hervorragend als hochmoduliger Bestandteil des Hybridcords. Aramid und Carbon sind in ihrer Anschaffung kostenintensiv. Eine Reduzierung dieser Festigkeitsträgermaterialien reduziert somit die Materialkosten.

Gemäß vorteilhaften Weiterbildungen ist der Hybridcord aus einem Garn aus Aramid und einem weiteren Garn aus PES oder aus einem Garn aus Aramid und einem weiteren Garn aus PA aufgebaut. Durch eine solch einfache Cordkonstruktion kann eine Hybridcord zur Verfügung gestellt werden, der z.B. bei der Anwendung im Fahrzeugluftreifen die notwendige Festigkeit bei sehr guten Flatspotting- und Rollwiderstands-Eigenschaften aufweist.

In einer bevorzugten Weiterbildung weist der Hybridcord ein Garn aus Aramid mit einer Feinheit von maximal 220 dtex auf. Durch den Einsatz eines solchen Festigkeitsträgers kann eine Festigkeitsträgerlage eines elastomeren Erzeugnisses bei guter Festigkeit mit geringerer Höhe bereitgestellt werden. Hierdurch ergeben sich zudem geringe Materialkosten und beim Einsatz im Fahrzeugluftreifen ein optimierter Rollwiderstand.

Bevorzugt weist das Garn aus Aramid eine Feinheit von 220 dtex auf. Bevorzugt ist das Garn aus Aramid der Feinheit 220 dtex mit einem weiteren Garn aus PA 66 der Feinheit 235 dtex oder mit einem Garn aus HMLS-PET der Feinheit 238 dtex endverdreht. Solche Festigkeitsträgerlagen zeichnen sich durch eine besonders geringe Höhe aus. Bevorzugt kann das Garn aus Aramid auch mit einem weiteren Garn aus PA 66 der Feinheit 470 dtex oder mit einem Garn aus HMLS-PET der Feinheit 550 dtex endverdreht sein. Solche Hybridcorde zeichnen sich durch eine hohe Bruchdehnung aus.

Der Unterschied in den Feinheiten der Garne eines Hybridcordes sollte möglichst gering gewählt werden, um einen möglichst gleichmäßigen und symmetrischen Cord zu erhalten, der sich gut verarbeiten lässt und der eine gute Restfestigkeit nach Ermüdung aufweist. Vorteilhaft ist es, wenn die den Cord bildenden Garne eine sehr ähnliche Feinheit aufweisen. Besonders vorteilhaft hat sich in dieser Hinsicht ein Hybridcord aus Garn aus Aramid mit 220 dtex und einem weiteren Garn aus PA 66 mit 235 dtex bzw. einem weiteren Garn aus HMLS-PET mit 238 dtex erwiesen.

Gemäß anderen vorteilhaften Weiterbildungen sind die Hybridcorde aus drei, vier oder mehr miteinander endverdrehten Garnen aufgebaut. Zweckmäßig ist es, wenn die Hybridcorde aus einem Garn oder aus zwei Garnen aus Aramid und aus zwei weiteren Garnen aufgebaut sind, wobei die weiteren Garne beide aus PES oder beide aus PA oder ein weiteres Garn aus PES und ein weiteres Garn aus PA gebildet sind.

Vorteilhaft ist es, wenn die Garne des Hybridcords mit einem Twistfaktor α von 80 bis 200 miteinander endverdreht sind. Der Twistfaktor α ist dabei definiert als α = Twist [T/m]-(Feinheit [tex]/ 1000)^{1/2} und ist ein Maß für die Drehungen pro Meter bezogen auf die Feinheit des Cords. Bei α < 80 lässt die Ermüdungsbeständigkeit stark nach, was zu Cord-Brüchen führen kann. Bei α > 200 hingegen lässt die Festigkeit stark nach, während die Prozesskosten zunehmend steigen. Bevorzugt sind die Garne des Hybridcords mit einem Twistfaktor α von 100 bis 150 miteinander endverdreht.

Um eine hohe Bruchdehnung des Festigkeitsträgers zu erwirken ist es vorteilhaft, wenn der Hybridcord mit einer Zugspannung von maximal 60 mN/tex, bevorzugt mit einer Zugspannung von maximal 40 mN/tex, heißverstreckt ist. Dies kann im Prozess der Haftimprägnierung erfolgen.

Für einen problemlosen Reifenbau mit Vulkanisation und gute
Hochgeschwindigkeitstauglichkeit weist der Hybridcord bei 3% Dehnung nach ASTM D885M ein Elastizitätsmodul von 80 mN/(tex·%) bis 300 mN/(tex·%), bevorzugt von 100 mN/(tex·%) bis 200 mN/(tex·%), auf.

In Bezug auf das Herstellungsverfahren wird die Aufgabe dadurch gelöst,
- dass das oder die niedrigmoduligen Garne eine kumulierte Feinheit von maximal 550 dtex , bevorzugt eine kumulierte Feinheit von maximal 250 dtex, aufweisen,
- dass das oder die hochmoduligen Garne eine kumulierte Feinheit von maximal 550 dtex, bevorzugt eine kumulierte Feinheit von maximal 250 dtex, aufweisen,
- dass der Hybridcord während des Trocknens einer Zugspannung von 5 mN/tex bis 50 mN/tex, bevorzugt einer Zugspannung von 10 mN/tex bis 30 mN/tex, ausgesetzt ist und
- dass der Hybridcord beim Heißverstrecken einer Zugspannung von 10 bis 60 mN/tex, bevorzugt einer Zugspannung 15 mN/tex bis 40 mN/tex, ausgesetzt ist und
- dass der Hybridcord unter einer Zugspannung von 0 mN/tex bis 30 mN/tex, bevorzugt von 3 mN/tex bis 15 mN/tex, relaxiert.

Mit einem solchen Verfahren kann ein erfindungsgemäßer Festigkeitsträger zur Verfügung gestellt werden. Der resultierende Hybridcord weist eine geringe Feinheit auf. Überraschenderweise weist ein solcher Hybridcord geringer Feinheit, der im Prozess der Haftimprägnierung in den Phasen des Trocknens, des Heißverstreckens und des Relaxierens eine sehr geringe Zugspannung erfährt, eine hohe Bruchdehnung, insbesondere eine Bruchdehnung von mindestens 5%, auf. Die Bruchdehnung ist höher als bei einem vergleichbaren Hybridcord, der während des Prozesses der Haftimprägnierung höheren Zugspannungen ausgesetzt ist. Hierdurch kann ein Festigkeitsträger für elastomere Erzeugnisse, insbesondere für die Gürtelbandage von Fahrzeugluftreifen, bereitgestellt werden, welcher bei Verwendung des Festigkeitsträgers in der Gürtelbandage eines Fahrzeugluftreifens durch seine geringe Feinheit den Rollwiderstand des Fahrzeugluftreifens verringert und gleichzeitig die Haltbarkeit des Fahrzeugluftreifens sicherstellt und einen problemlosen Reifenbau samt Vulkanisation ermöglicht.

Ein vorteilhafter Hybridcord ergibt sich, wenn das niedrigmodulige Garn ein Garn aus Polyester oder Polyamid ist und/oder wenn das hochmodulige Garn ein Garn aus Aramid oder Glas oder Carbon ist.

Für die zuverlässige Haftung zu Gummi ist es vorteilhaft, wenn als Haftvermittler Resorcin-Formaldehyd-Latex (RFL), ein Isocyanat-Haftsystem oder Epoxidharz verwendet wird.

Zweckmäßig ist es, wenn das oder die hochmoduligen Garne des Hybridcords eine kumulierte Feinheit von maximal 250 dtex aufweisen. Zweckmäßig ist es dabei, wenn die kumulierte Feinheit des oder der niedrigmoduligen Garne eine kumulierte Feinheit von maximal 250 dtex aufweisen.

Zweckmäßig ist es auch, wenn der Hybridcord aus einem Garn aus Aramid und aus einem weiteren Garn aus PES oder aus einem Garn aus Aramid und einem weiteren Garn aus PA aufgebaut ist. Zweckmäßig ist es auch, wenn der Hybridcord ein Garn aus Aramid mit einer Feinheit von maximal 250 dtex, bevorzugt mit einer Feinheit von maximal 220 dtex, aufweist.

Bei der Verwendung des vorbeschriebenen Hybridcords als Festigkeitsträger in weiteren elastomeren Erzeugnissen wie einem Fahrzeugluftreifen, einemFördergurt, einem Antriebsriemen, einem Schlauch und / oder einem Luftfederbalg, werden Vorteile durch die reduzierte Höhe der Festigkeitsträgerlage bei gleichzeitigem vorteilhaften Kraft-Dehnung-Verhalten erzielt.

Verwendet man einen vorbeschriebenen Hybridcord als Festigkeitsträger der Gürtelbandage eines Fahrzeugluftreifens, so weist der Reifen eine verbesserte Haltbarkeit auf und ermöglicht einen problemlosen Reifenbau samt Vulkanisation sowie einen verringerten Rollwiderstand.

Ausführungsbeispiele und weitere Vorteile der Erfindung werden im Zusammenhang mit den Tabellen 1 bis 3 näher erläutert.

In der Tabelle 1 sind für einige Beispiele von Hybridcorden, die gemäß der Erfindung ausgeführt sind angeführt und mit Hybridcord I, II, III und IV bezeichnet. Die Hybridcorde weisen jeweils ein Garn aus Aramid der Feinheit 220 dtex auf, welches mit 550 T/m in Z-Richtung erstverdreht ist. Die Hybridcorde weisen jeweils ein weiteres Garn auf, welches mit 550 T/m in Z-Richtung erstverdreht ist. Die beiden Garne sind jeweils mit 550 T/m in S-Richtung miteinander zum Hybridcord endverdreht. Das weitere Garn des Hybridcords I ist ein Garn aus PA 66 der Feinheit 470 dtex, das weitere Garn des Hybridcords II ist ein Garn aus PA 66 der Feinheit 235 dtex, das weitere Garn des Hybridcords III ist ein Garn aus PET der Feinheit 550 dtex und das weitere Garn des Hybridcords IV ist ein Garn aus PET der Feinheit 238 dtex.

**Tabelle 1**

| **Hybridcord I** | **Hybridcord II** | **Hybridcord III** | **Hybridcord IV** |
|---|---|---|---|
| Aramid 220 x1 + PA 66 470x1 | Aramid 220 x1 + PA 66 235 x1 | Aramid 220 x1 + PET 550 x1 | Aramid 220 x1 + PET 238 x1 |

Die Hybridcorde sind mit einem RFL-Dip als Haftimprägnierung versehen worden. In den Prozessen der Haftimprägnierung wurde der Hybridcord dann bei einer Temperatur von 100 °C bis 200 °C unter einer Zugspannung getrocknet, danach bei einer Temperatur von 200 °C bis 250 °C unter einer Zugspannung heißverstreckt und nach der Heißverstreckung unter einer Zugspannung bei 100 °C bis 200 °C relaxiert. Die jeweilige Zugspannung ist in Tabelle 2 angegeben.

**Tabelle 2**

| | **Hybridcord I** | **Hybridcord II** | **Hybridcord III** | **Hybridcord IV** |
|---|---|---|---|---|
| | Zugspannung [mN/tex] | Zugspannung [mN/tex] | Zugspannung [mN/tex] | Zugspannung [mN/tex] |
| Trocknung | 13 | 20 | 13 | 17 |
| Heißverstreckung | 20 | 29 | 17 | 22 |
| Relaxation | 6 | 11 | 4 | 4 |

Mit den vorgenannten Hybridcorden wurden Kraft-Dehnungsdaten gemäß ASTM D 855M ermittelt, die in der Tabelle 3 angeführt sind. Alle Hybridcorde weisen eine Bruchdehnung von mindestens 5% auf.

**Tabelle 3**

| | **Hybridcord I** | **Hybridcord II** | **Hybridcord III** | **Hybridcord IV** |
|---|---|---|---|---|
| Bruchdehnung | 6,9 % | 5,7 % | 7,0% | 5,3 % |
| Bruchkraft | 68 N | 60 N | 70 N | 55 N |
| Kraft 2% Dehnung | 12 N | 13 N | 17 N | 16 N |
| Kraft bei 4% Dehnung | 28 N | 35 N | 32 N | 37 N |

Die geringe Feinheit solcher Hybridcorde ermöglicht die Herstellung von dünnen Festigkeitsträgerlagen für elastomere Erzeugnisse. Bei der Verwendung eines solchen Festigkeitsträgers in der Gürtelbandage eines Fahrzeugluftreifens kann somit der Rollwiderstand des Fahrzeugluftreifens verringert werden. Trotz der geringen Feinheit ist die Haltbarkeit sichergestellt und ein problemloser Reifenbau samt Vulkanisation ist ermöglicht.

## Patentansprüche

1. Festigkeitsträger für elastomere Erzeugnisse, insbesondere für die Gürtelbandage eines Fahrzeugluftreifens, wobei der Festigkeitsträger ein Hybridcord ist, der zumindest ein niedrigmoduliges Garn mit einem Elastizitätsmodul von maximal 100 mN/(tex·%) und zumindest ein hochmoduliges Garn mit einem Elastizitätsmodul von mindestens 200 mN/(tex·%), jeweils nach ASTM D885M bei einer Dehnung von 3%, aufweist und wobei das oder die niedrigmoduligen Garne eine kumulierte Feinheit von maximal 550 dtex aufweisen,
**dadurch gekennzeichnet, dass**
- dass das oder die hochmoduligen Garne eine kumulierte Feinheit von maximal 550 dtex, bevorzugt eine kumulierte Feinheit von maximal 250 dtex aufweisen,
- dass der Hybridcord eine Bruchdehnung von mindestens 5% aufweist,
- dass alle Garne des Hybridcords miteinander endverdreht sind und
- dass der Hybridcord mit einer Haftimprägnierung versehen ist.

2. Festigkeitsträger nach Anspruch 1, **dadurch gekennzeichnet, dass** das oder die niedrigmoduligen Garne eine kumulierte Feinheit von maximal 250 dtex aufweisen.

3. Festigkeitsträger nach zumindest einem der vorangehenden Ansprüche, **dadurch gekennzeichnet, dass** der Hybridcord ein niedrigmoduliges Garn aus Polyester (PES) und / oder ein niedrigmoduliges Garn aus Polyamid (PA) aufweist.

4. Festigkeitsträger nach zumindest einem der vorangehenden Ansprüche, **dadurch gekennzeichnet, dass** der Hybridcord ein hochmoduliges Garn aus Aramid und / oder ein hochmoduliges Garn aus Carbon und / oder ein hochmoduliges Garn aus Glas aufweist.

5. Festigkeitsträger nach zumindest einem der vorangehenden Ansprüche, **dadurch gekennzeichnet, dass** der Hybridcord aus einem Garn aus Aramid und einem weiteren Garn aus PES oder aus einem Garn aus Aramid und einem weiteren Garn aus PA aufgebaut ist.

6. Festigkeitsträger nach zumindest einem der vorangehenden Ansprüche,
**dadurch gekennzeichnet, dass** der Hybridcord ein Garn aus Aramid mit einer Feinheit von maximal 220 dtex, aufweist.

7. Festigkeitsträger nach zumindest einem der vorangehenden Ansprüche,
**dadurch gekennzeichnet, dass** die Garne des Hybridcords mit einem Twistfaktor α von 80 bis 200, bevorzugt mit einem Twistfaktor α von 100 bis 150, miteinander endverdreht sind.

8. Festigkeitsträger nach zumindest einem der vorangehenden Ansprüche,
**dadurch gekennzeichnet, dass** der Hybridcord unter einer Zugspannung von maximal 60 mN/tex, bevorzugt unter einer Zugspannung von maximal 40 mN/tex, heißverstreckt ist.

9. Festigkeitsträger nach zumindest einem der vorangehenden Ansprüche, **dadurch gekennzeichnet, dass** das Elastizitätsmodul des Hybridcords bei 3% Dehnung nach ASTM D885M 80 mN/(tex·%) bis 300 mN/(tex·%), bevorzugt 100 mN/(tex·%) bis 200 mN/(tex·%), beträgt.

10. Verfahren zur Herstellung eines Festigkeitsträgers für elastomere Erzeugnisse, insbesondere für die Gürtelbandage eines Fahrzeugluftreifens, gemäß zumindest einem der vorangehenden Ansprüche,
- wobei der Festigkeitsträger ein Hybridcord aufweisend zumindest ein niedrigmoduliges Garn mit einem Elastizitätsmodul von maximal 100 mN/(tex·%) und zumindest ein hochmoduliges Garn mit einem Elastizitätsmodul von mindestens 200 mN/(tex·%), jeweils nach ASTM D885M bei einer Dehnung von 3%, ist,
- wobei das oder die niedrigmoduligen Garne eine kumulierte Feinheit von maximal 550 dtex, bevorzugt eine kumulierte Feinheit von maximal 250 dtex, aufweisen,
**dadurch gekennzeichnet, dass**
- wobei alle Garne des Hybridcords miteinander endverdreht sind,
- wobei ein Haftvermittler auf den Hybridcord aufgebracht wird,
- wobei der Hybridcord dann bei einer Temperatur von 100 °C bis 200°C getrocknet wird,
- wobei der Hybridcord nach dem Trocknen bei einer Temperatur von 200°C bis 250°C heißverstreckt wird und
- wobei der Hybridcord nach der Heißverstreckung unter einer Restspannung bei 100°C bis 200 °C relaxiert,
- dass das oder die hochmoduligen Garne eine kumulierte Feinheit von maximal 550 dtex, bevorzugt eine kumulierte Feinheit von maximal 250 dtex, aufweisen,
- dass der Hybridcord während des Trocknens einer Zugspannung von 5 bis 50 mN/tex, bevorzugt einer Zugspannung von 10 mN/tex bis 30 mN/tex, ausgesetzt ist und
- dass der Hybridcord beim Heißverstrecken einer Zugspannung von 10 mN/tex bis 60 mN/tex, bevorzugt einer Zugspannung 15 mN/tex bis 40 mN/tex, ausgesetzt ist und
- dass der Hybridcord unter einer Zugspannung von 0 mN/tex bis 30 mN/tex, bevorzugt von 3 mN/tex bis 15 mN/tex, relaxiert.

11. Verfahren nach Anspruch 10, **dadurch gekennzeichnet, dass** das niedrigmodulige Garn ein Garn aus Polyester oder Polyamid ist und/oder dass das hochmodulige Garn ein Garn aus Aramid oder Glas oder Carbon ist.

12. Verfahren nach zumindest einem der Ansprüche 10 bis 11, **dadurch gekennzeichnet, dass** als Haftvermittler Resorzin-Formaldehyd-Latex (RFL), ein Isocyanat-Haftsystem oder Epoxidharz verwendet wird.

13. Verwendung eines Hybridcords nach zumindest einem der Ansprüche 1 bis 9 als Festigkeitsträger eines Fahrzeugluftreifens, eines Fördergurtes, eines Antriebsriemens, eines Schlauchs und / oder eines Luftfederbalges.

14. Verwendung eines Hybridcords nach zumindest einem der Ansprüche 1 bis 9 als Festigkeitsträger der Gürtelbandage eines Fahrzeugluftreifens.

## Claims

1. Strength member for elastomeric articles of manufacture, in particular for the belt bandage of a pneumatic vehicle tire, wherein the strength member is a hybrid cord comprising at least one low-modulus yarn having an modulus of elasticity of not more than 100 mN/(tex·%) and at least one high-modulus yarn having an modulus of elasticity of not less than 200 mN/(tex·%), each to ASTM D885M at an elongation of 3% and wherein the low-modulus yarn or yarns has or have a cumulative fineness of not more than 550 dtex,
**characterized in that**
- the high-modulus yarn or yarns has or have a cumulative fineness of not more than 550 dtex, preferably a cumulative fineness of not more than 250 dtex,
- the hybrid cord has a breaking extension of not less than 5%,
- all the yarns of the hybrid core are folded together, and
- the hybrid cord is provided an adhesive impregnation.

2. Strength member according to Claim 1, **characterized in that** the low-modulus yarn or yarns has or have a cumulative fineness of not more than 250 dtex.

3. Strength member according to either or both of the preceding claims, **characterized in that** the hybrid cord comprises a low-modulus yarn in polyester (PES) and/or a low-modulus yarn in polyamide (PA).

4. Strength member according to one or more of the preceding claims, **characterized in that** the hybrid cord comprises a high-modulus yarn in aramid and/or a high-modulus yarn in carbon and/or a high-modulus yarn in glass.

5. Strength member according to one or more of the preceding claims, **characterized in that** the hybrid cord is constructed of a yarn in aramid and a further yarn in PES, or of a yarn in aramid and a further yarn in PA.

6. Strength member according to one or more of the preceding claims, **characterized in that** the hybrid cord comprises an aramid yarn having a fineness of not more than 220 dtex.

7. Strength member according to one or more of the preceding claims, **characterized in that** the yarns of the hybrid cord are folded together using a twist factor α of 80 to 200, preferably using a twist factor α of 100 to 150.

8. Strength member according to one or more of the preceding claims, **characterized in that** the hybrid cord has been hot-drawn under a tensile stress of not more than 60 mN/tex, preferably under a tensile stress of not more than 40 mN/tex.

9. Strength member according to one or more of the preceding claims, **characterized in that** the modulus of elasticity of the hybrid cord at 3% elongation to ASTM D885M is from 80 mN/(tex·%) to 300 mN/(tex_{·}%), preferably from 100 mN/(tex·%) to 200 mN/(tex·%).

10. Method of producing a strength member for elastomeric articles of manufacture, in particular for the belt bandage of a pneumatic vehicle tire, as defined in one or more of the preceding claims,
- wherein the strength member is a hybrid cord comprising at least one low-modulus yarn having an modulus of elasticity of not more than 100 mN/(tex·%) and at least one high-modulus yarn having an modulus of elasticity of not less than 200 mN/(tex·%), each to ASTM D885M at an elongation of 3%,
wherein the low-modulus yarn or yarns has or have a cumulative fineness of not more than 550 dtex, preferably a cumulative fineness of not more than 250 dtex, **characterized in that**
- wherein all the yarns of the hybrid cord are folded together,
- wherein an adhesion promoter is applied to the hybrid cord,
- wherein the hybrid cord is then dried at a temperature of from 100°C to 200°C,
- wherein the hybrid cord is hot-drawn at a temperature of from 200°C to 250°C after drying, and
- wherein the hybrid cord relaxes at from 100°C to 200°C under a residual stress after hot drawing,
- the high-modulus yarn or yarns has or have a cumulative fineness of not more than 550 dtex, preferably a cumulative fineness of not more than 250 dtex,
- the hybrid cord is exposed to a tensile stress of from 5 to 50 mN/tex, preferably to a tensile stress of from 10 mN/tex to 30 mN/tex, during drying, and
- the hybrid cord is exposed to a tensile stress of from 10 mN/tex to 60 mN/tex, preferably to a tensile stress of from 15 mN/tex to 40 mN/tex, whilst undergoing hot drawing, and
- the hybrid cord relaxes under a tensile stress of from 0 mN/tex to 30 mN/tex, preferably from 3 mN/tex to 15 mN/tex.

11. Method according to Claim 10, **characterized in that** the low-modulus yarn is a yarn in polyester or polyamide and/or **in that** the high-modulus yarn is a yarn in aramid or glass or carbon.

12. Method according to either or both of Claims 10 and 11, **characterized in that** the adhesion promoter used is resorcinol-formaldehyde latex (RFL), an isocyanate-type adhesive system or epoxy resin.

13. Method of using a hybrid cord according to one or more of Claims 1 to 9 as a strength member of a pneumatic vehicle tire, of a conveyor belt, of a drive belt, of a hose and/or of an air spring lobe.

14. Method of using a hybrid cord according to one or more of Claims 1 to 9 as a strength member of the belt bandage of a pneumatic vehicle tire.

## Revendications

1. Renfort pour produits élastomères, notamment pour le bandage de ceinture d'un pneu de véhicule, le renfort étant un câble hybride, qui comprend au moins un fil de module faible ayant un module d'élasticité d'au plus 100 mN/(% en tex) et au moins un fil de module élevé ayant un module d'élasticité d'au moins 200 mN/(% en tex), à chaque fois selon ASTM D885M à un allongement de 3 %, et le ou les fils de module faible présentant un titre cumulé d'au plus 550 dtex, **caractérisé en ce que**
- le ou les fils de module élevé présentent un titre cumulé d'au plus 550 dtex, de préférence un titre cumulé d'au plus 250 dtex,
- le câble hybride présente un allongement à la rupture d'au moins 5 %,
- tous les fils du câble hybride sont vrillés aux extrémités les uns avec les autres, et
- le câble hybride est muni d'une imprégnation adhésive.

2. Renfort selon la revendication 1, **caractérisé en ce que** le ou les fils de module faible présentent un titre cumulé d'au plus 250 dtex.

3. Renfort selon au moins l'une quelconque des revendications précédentes, **caractérisé en ce que** le câble hybride comprend un fil de module faible en polyester (PES) et/ou un fil de module faible en polyamide (PA).

4. Renfort selon au moins l'une quelconque des revendications précédentes, **caractérisé en ce que** le câble hybride comprend un fil de module élevé en aramide et/ou un fil de module élevé en carbone et/ou un fil de module élevé en verre.

5. Renfort selon au moins l'une quelconque des revendications précédentes, **caractérisé en ce que** le câble hybride est formé par un fil en aramide et un autre fil en PES ou par un fil en aramide et un autre fil en PA.

6. Renfort selon au moins l'une quelconque des revendications précédentes, **caractérisé en ce que** le câble hybride comprend un fil en aramide ayant un titre d'au plus 220 dtex.

7. Renfort selon au moins l'une quelconque des revendications précédentes, **caractérisé en ce que** les fils du câble hybride sont vrillés aux extrémités les uns avec les autres avec un facteur d'enroulement α de 80 à 200, de préférence avec un facteur d'enroulement α de 100 à 150.

8. Renfort selon au moins l'une quelconque des revendications précédentes, **caractérisé en ce que** le câble hybride est étiré à chaud sous une contrainte de traction d'au plus 60 mN/tex, de préférence sous une contrainte de traction d'au plus 40 mN/tex.

9. Renfort selon au moins l'une quelconque des revendications précédentes, **caractérisé en ce que** le module d'élasticité du câble hybride à 3 % d'allongement selon ASTM D885M est de 80 mN/(% en tex) à 300 mN/(% en tex), de préférence de 100 mN/(% en tex) à 200 mN/(% en tex).

10. Procédé de fabrication d'un renfort pour produits élastomères, notamment pour le bandage de ceinture d'un pneu de véhicule, selon au moins l'une quelconque des revendications précédentes,
- le renfort étant un câble hybride, qui comprend au moins un fil de module faible ayant un module d'élasticité d'au plus 100 mN/(% en tex) et au moins un fil de module élevé ayant un module d'élasticité d'au moins 200 mN/(% en tex), à chaque fois selon ASTM D885M à un allongement de 3 %,
- le ou les fils présentant un titre cumulé d'au plus 550 dtex, de préférence un titre cumulé d'au plus 250 dtex,
**caractérisé en ce que**
- tous les fils du câble hybride étant vrillés aux extrémités les uns avec les autres,
- un promoteur d'adhésion étant appliqué sur le câble hybride,
- puis le câble hybride étant séché à une température de 100°C à 200°C,
- le câble hybride étant étiré à chaud après le séchage à une température de 200 °C à 250°C, et
- le câble hybride étant relaxé après l'étirement à chaud sous une contrainte résiduelle à une température de 100°C à 200°C,
- le ou les fils de module élevé présentent un titre cumulé d'au plus 550 dtex, de préférence un titre cumulé d'au plus 250 dtex,
- le câble hybride est exposé pendant le séchage à une contrainte de traction de 5 à 50 mN/tex, de préférence à une contrainte de traction de 10 mN/tex à 30 mN/tex, et
- le câble hybride est exposé lors de l'étirement à chaud à une contrainte de traction de 10 mN/tex à 60 mN/tex, de préférence à une contrainte de traction de 15 mN/tex à 40 mN/tex, et
- le câble hybride est relaxé à une contrainte de traction de 0 mN/tex à 30 mN/tex, de préférence de 3 mN/tex à 15 mN/tex.

11. Procédé selon la revendication 10, **caractérisé en ce que** le fil de module faible est un fil en polyester ou polyamide et/ou **en ce que** le fil de module élevé est un fil en aramide ou en verre ou en carbone.

12. Procédé selon au moins l'une quelconque des revendications 10 et 11, **caractérisé en ce qu'**un latex de résorcine-formaldéhyde (RFL), un système adhésif à base d'isocyanate ou une résine époxyde est utilisé(e) en tant que promoteur d'adhésion.

13. Utilisation d'un câble hybride selon au moins l'une quelconque des revendications 1 à 9 en tant que renfort d'un pneu de véhicule, d'une bande de transport, d'une courroie de transmission, d'un tuyau et/ou d'un soufflet de ressort pneumatique.

14. Utilisation d'un câble hybride selon au moins l'une quelconque des revendications 1 à 9 en tant que renfort du bandage de ceinture d'un pneu de véhicule.
